# EUROPÄISCHE PATENTANMELDUNG

(11) **EP 0 670 637 A2**
(43) Veröffentlichungstag der Anmeldung: **06.09.1995**
(21) Anmeldenummer: 95102873.7
(22) Anmeldetag: 01.03.1995
(51) Int. Cl.: H04B 1/38

(54) **Mobilfunkanlage für drahtlose Daten-und Fernsprechübertragung**

(30) Priorität: 04.03.1994 DE 4407133
(71) Anmelder: TEMIC TELEFUNKEN microelectronic GmbH, D-74072 Heilbronn (DE)
(72) Erfinder: Schön, Josef, D-85072 Eichstatt (DE); Blum, Reinhard, D-85368 Moosburg (DE)
(74) Vertreter: Maute, Hans-Jürgen, Dipl.-Ing.

(57) **Zusammenfassung**

Ein dem Standardformat PCMCIA entsprechendes Funkmodul in der Größe von Kreditkarten kann zwecks drahtloser Datenkommunikation in einem Funknetz von einem tragbaren Computer aufgenommen werden. Erfindungsgemäß kann dieses Funkmodul so aufgebaut werden, daß es wahlweise für den Betrieb als Mobiltelefon von einem Handapparat oder für den Betrieb als Autotelefon von einem Autoradio oder für den Telefaxbetrieb mit einem mobilen Telefaxgerät lösbar verbunden werden kann.

## Beschreibung

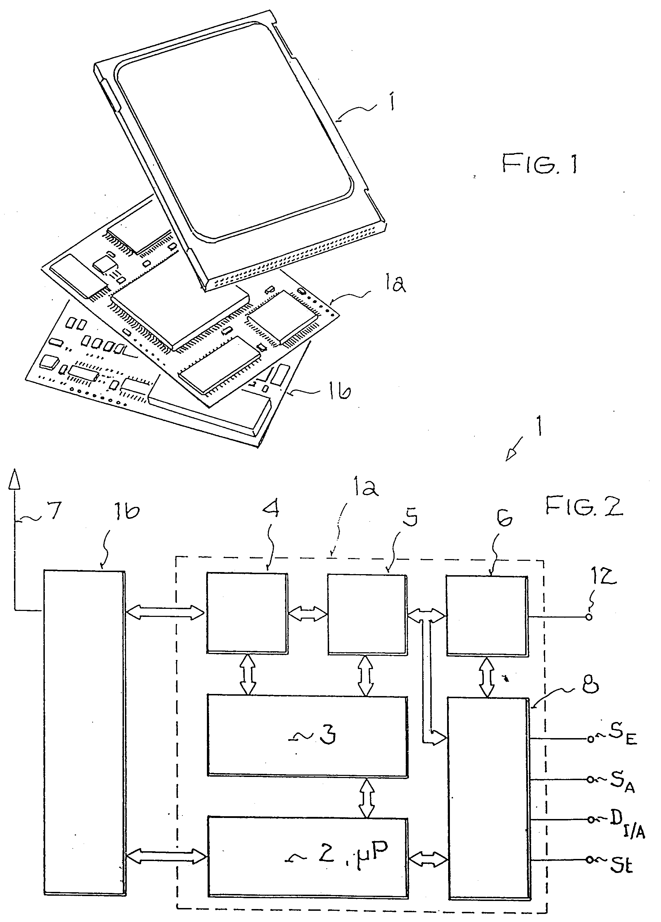

Die Erfindung betrifft eine Mobilfunkanlage im PCMCIA (personal computer memory card international association)-Standard, die im wesentlichen aus einem einen Basisbandteil und einen Hf-Teil enthaltenden Funkmodul, das zur Durchführung einer Datenkommunikation in einen tragbaren Computer gesteckt wird. Ein solches Funkmodul, das ungefähr die Abmessungen einer Kreditkarte aufweist, ist in Figur 1 dargestellt und enthält auf einer Leiterplatte 1a den Basisbandteil und auf einer weiteren Leiterplatte 1b den Hf-Teil. Auf einer Schmalseite ist eine Steckerleiste zu erkennen, die die Verbindung zu dem Endgerät, also dem tragbaren Computer herstellt.

In den vergangenen Jahren wurde in Europa das paneuropäische zellulare Digitalnetz GSM (Grupp Spezial Mobil) geschaffen, das die Übertragung von Sprache und Daten ausschließlich digital durchführt. Dabei wird die Sprache nicht nur digitalisiert sondern auch verschlüsselt; ein hierfür entwickelter Sprach-Codek arbeitet mit 13 kBit/s in einem 22,8-kBit/s-Nutzkanal.

In den USA wurde dagegen ein auf analoger Basis arbeitendes Mobilfunknetz mit dem Namen AMPS (Advanced Mobil Phone System) installiert. Die Sende- und Empfangsfrequenzen liegen bei beiden Systemen im 800/900-MHz-Bereich.

Nachteilig bei dem oben beschriebenen Funkmodul ist die ausschließliche Verwendung in einem tragbaren, ebenfalls dem PCMCIA-Standard entsprechenden Computer zwecks Austausch von elektronischen Daten.

Die Aufgabe der Erfindung besteht demnach darin, ein Funkmodul für eine Mobilfunkanlage anzugeben, die neben Datendiensten auch einen Fernsprechverkehr ermöglicht.

Diese Aufgabe wird mit den Merkmalen des Patentanspruches 1 gelöst, wonach dieses Funkmodul für den Betrieb als Mobiltelefon mit einem Handapparat oder für den Betrieb als Autotelefon mit einem Autoradio oder für den Telefaxbetrieb mit einem mobilen Telefaxgerät lösbar verbunden werden kann, wobei diese Endgeräte zur Durchführung der entsprechenden Funktion mit geeigneten Funktionseinheiten ausgerüstet sind.

Vorzugsweise ist der Handapparat mit einem Lautsprecher, einem Mikrofon und einer Tastatur ausgestattet. Gegebenenfalls kann auch eine Anzeige vorgesehen werden.

Bei einem Autoradio ist neben einer Leistungs- und Antennenanpassung ein Mikrofon sowie eine Ein- und Ausgabeeinheit erforderlich, die entweder mit den vorhandenen Bedien- und Anzeigeelementen realisiert wird oder auch als Infrarot-Fernsteuerung ausgebildet ist.

Soll mit dem Funkmodul ein mobiles Telefaxgerät realisiert werden, ist bei einem üblichen Telefaxgerät lediglich eine Schnittstellenanpassung vorzunehmen.

Diese Endgeräte entsprechen vorzugsweise dem PCMCIA-Standard und sind gegenüber handelsüblichen Geräten entsprechend ausgerüstet. Der Besitz eines solchen Funkmoduls führt zu einer großen Flexibilität hinsichtlich des Zugangs zu verschiedensten Telefonie- und Datendiensten, ohne daß der Teilnehmer jeweils eine eigene Zugangsberechtigung benötigt.

Bei einem Modul nach dem PCMCIA-Standard sieht diese Norm hinsichtlich der Schnittstelle zum Endgerät lediglich eine digitale Datenübertragung vor. Um die Fernsprechkommunikation im GSM- oder AMPS-Mobilfunknetz zu realisieren, müßte auf der Endgeräteseite analoge Sprachinformation zunächst digitalisiert werden, wodurch der gerätemäßige Aufwand zunehmen würde.

Deshalb wird gemäß einer vorteilhaften Ausführungsform der Erfindung über die digitale Schnittstelle des PCMCIA-Standards die analoge Sprachinformation übertragen. Dadurch entfällt die Notwendigkeit auf der Geräteendseite eine Digitalwandlung vorzunehmen.

Bei einer anderen vorteilhaften Weiterbildung der Erfindung kann bei einem Einsatz des Funkmoduls in einem Autoradio der Radiolautsprecher als Freisprecheinrichtung benützt werden. Alternativ hierzu kann auch ein Handapparat vorgesehen werden, der mit dem Autoradio lösbar verbunden wird.

Um die Flexibilität hinsichtlich der Anwendung des Funkmoduls weiter zu verbessern, kann dieses mit einem Modem für leitungsgebundene Daten- und Sprachübertragung ausgerüstet werden. Hierfür ist nur wenig zusätzliche Hardware notwendig, sondern mit den schon vorhandenen Bausteinen wird die erforderliche Software implementiert. Diese zusätzliche Funktion erlaubt es dem Benutzer, wenn er dieses Funkmodul in einen tragbaren Computer oder in ein tragbares Telefaxgerät steckt, zwischen leitungsgebundener und drahtloser Daten- und Sprachübertragung zu wählen.

Schließlich kann die erfindungsgemäße Mobilfunkanlage sowohl für das europäische GSM- als auch für das amerikanische AMPS-Mobilfunknetz verwendet werden, wenn das Funkmodul dem GSM- bzw. dem AMPS-Standort entspricht.

Im folgenden soll ein Ausführungsbeispiel der erfindungsgemäßen Mobilfunkanlage im Zusammenhang mit den Zeichnungen dargestellt und erläutert werden. Es zeigen:
- Figur 2: ein Blockschaltbild der Funktionsblöcke für ein GSM-Funkmodul,
- Figur 3: eine schematische Darstellung eines LaptopComputers im Zusammenhang mit der Verwendung des Funkmoduls nach Figur 1,
- Figur 4: eine schematische Darstellung eines das Funkmodul nach Figur 1 aufnehmenden Autoradios für den Betrieb als Autotelefon,
- Figur 5: eine schematische Darstellung eines das Funkmodul nach Figur 1 aufnehmenden Telefaxgerätes für den Betrieb als mobiles Telefaxgerät,
- Figur 6: eine schematische Darstellung eines das Funkmodul nach Figur 1 aufnehmenden Handapparats für den Betrieb als Mobiltelefon.

Das digitale GSM-Mobilfunknetz stellt eine europaweite Standardisierung dar, das in der Bundesrepublik Deutschland auch D-Netz genannt wird. Dieses Mobilfunknetz erlaubt neben der Telefonie auch die Installation verschiedenster Daten- und Telematikdiensten. Ein für dieses Mobilfunknetz vorgesehenes Funkmodul gemäß Figur 1 hat - wie oben schon beschrieben wurde - ungefähr die Größe einer Kreditkarte und entspricht dem weltweit gültigen Standardformat PCMCIA, wobei dieses Funkmodul alle für den Mobilfunkbetrieb wesentlichen elektronischen Funktionseinheiten enthält, wie weiter unten anhand der Figur 2 erläutert werden soll.

Solche Funkmodule sollen von handelsüblichen tragbaren Palmtop-, Notebook- oder Laptop-Computer über Steckverbindungen aufgenommen werden und den drahtlosen Austausch elektronischer Nachrichten ermöglichen. Dabei müssen natürlich auch diese Endgeräte dem Standardformat PCMCIA entsprechen, weshalb hierzu eine Reihe von Modifizierungen an diesen Endgeräten notwendig sind.

Nach Figur 2 enthält ein GSM-Funkmodul zunächst eine den Hf-Teil darstellende Sende- und Empfangseinheit 1b, die nach Figur 1 auf einer Leiterplatte 1b untergebracht ist und im Betrieb mit einer dem Endgerät zugeordneten Antenne 7 verbunden wird. Die weitere in Figur 1 dargestellte Leiterplatte 1a enthält die Funktionsblöcke des Basisband-Teils: einen System-Controller 2 als zentrale Steuereinheit, einen Synthesizer 3, einen digitalen Basisband-Prozessor 4, einen Sprach-Codec (Sprach-Codierer/Decodierer) 5, ein leitungsgebundenes Modem 6 mit einem entsprechenden Anschluß 12 sowie eine Schnittstelle 8 im PCMCIA-Format, die einen Eingang S_{E} bzw. einen Ausgang S_{A} für analoge Sprachinformation, einen Ein- und Ausgang D_{I/A} für digitale Daten sowie einen Anschluß St für Steuerzwecke aufweist.

Das Basisband-Teil hat im Sendemodus die Aufgabe eine Sprachdatenreduktion bzw. bei Übermittlung von digitalen Daten eine Informationsreduktion und anschließend eine Kanalcodierung durchzuführen. Umgekehrt erfolgt im Empfangsmodus zunächst eine Kanaldecodierung und danach eine Sprach- bzw. Informationssynthetisierung. Schließlich übernimmt dieses Basisband-Teil auch das gesamte Systemmanagement. Die Wirkungsweise der einzelnen Funktionsblöcke ist bekannt und soll daher nicht beschrieben werden.

Das Modem 6 kann wahlweise vorgesehen werden, falls ein Benutzer neben einer drahtlosen Sprach- und Datenkommunikation auch eine leitungsgebundene Sprach- und Datenkommunikation über den Anschluß 12 durchführen möchte.

Das Funkmodul nach Figur 1 ist auch für den Einsatz im amerikanischen AMPS-Mobilfunksystem geeignet, wenn bezüglich der Funktionalität entsprechende Anpassungen vorgenommen werden, da dieses Mobilfunknetz auf einer analogen Verarbeitung der Signale beruht. Deshalb entfällt beispielsweise bei einem AMPS-Funkmodul ein Sprach-Codec 5, wie er bei einem GSM-Funkmodul gemäß Figur 2 vorgesehen ist. Über die Schnittstelle 8 geführte digitale Daten werden in dem Modem 6 einer D/A-Wandlung unterzogen. Werden dagegen analoge Sprachinformationen übermittelt bzw. empfangen, entfällt natürlich eine D/A- bzw. A/D-Wandlung. Daher ist im Gegensatz zu einem GSM-Funkmodul bei einem AMPS-Funkmodul das Modem 6 zwingend erforderlich.

Dann kann bei einem solchen AMPS-Funkmodul natürlich auch über einen Anschluß 12 des Modems 6 ein leitungsgebundener Fernsprech- und Datenverkehr aufgenommen werden.

Das Funkmodul nach Figur 1, das sowohl als GSM-Funkmodul als auch als AMPS-Funkmodul ausgebildet sein kann, entspricht dem Standardformat PCMCIA. Nach diesem Format ist die Schnittstelle (siehe Figur 2, Bezugszeichen 8) ausschließlich für die Übertragung von digitalen Daten vorgesehen. Da im vorliegenden Ausführungsbeispiel über diese digitale Schnittstelle auch analoge Sprachinformationen übertragen werden, entfällt zur Durchführung eines Fernsprechverkehrs eine Digitalwandlung im Endgerät.

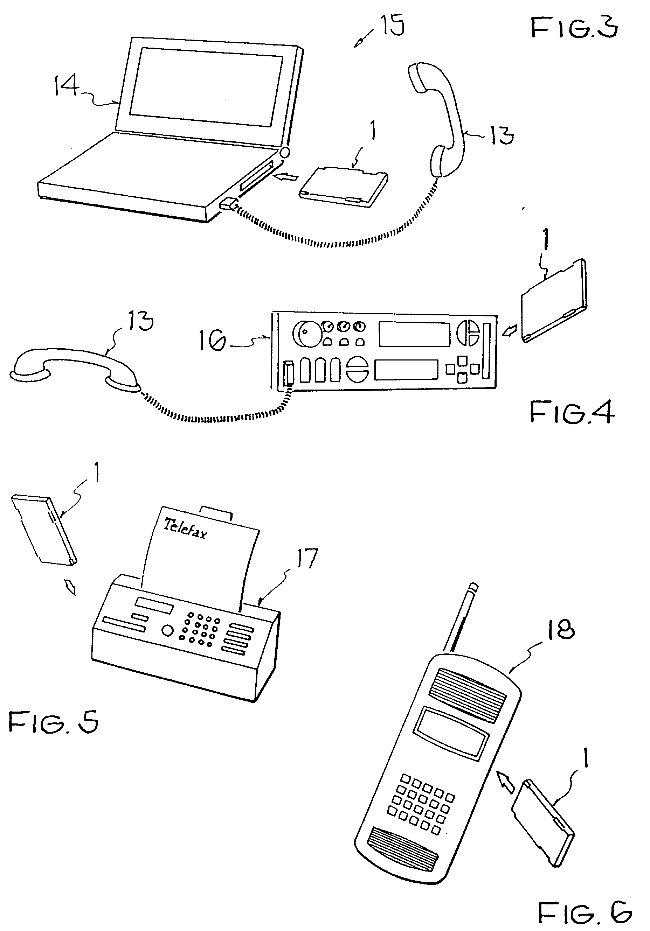

So kann nach Figur 3 als Endgerät ein Laptop-Computer 15 zur Aufnahme eines Funkmoduls 1 entsprechend modifiziert sein, so daß mittels diesem Laptop 15 nicht nur ein Datenaustausch sondern auch ein Fernsprechverkehr möglich ist. Hierzu kann dieser Computer 15 ein Mikrofon sowie einen Lautsprecher 14 enthalten, so daß ein Freisprechverkehr möglich ist oder auch alternativ ein Handapparat 13 vorgesehen sein, der mit dem Computer 15 verbunden werden kann.

Ein weiteres Endgerät zeigt Figur 4, wonach ein Autoradio 16 zur Aufnahme eines Funkmoduls 1 entsprechend ausgerüstet ist. Hierzu ist eine Aufnahmevorrichtung für das Funkmodul 1 zur Bildung einer entsprechenden Schnittstelle sowie ein Mikrofon erforderlich. Weiterhin kann eine Ein- und Ausgabeeinrichtung über die vorhandene Tastatur und Anzeige realisiert werden. Stattdessen kann hierfür auch eine in der Figur 4 nicht dargestellte Infrarot-Fernbedienung vorgesehen werden. Eine solche Ein- und Ausgabeeinrichtung dient der Eingabe von Telefonnummern, als Nummernspeicher oder zur Anrufumleitung usw.. Schließlich ist auch eine Antennen- und Leistungsanpassung erforderlich.

Hiermit wird dieses Autoradio 16 zu einem Autotelefon, wobei der Fernsprechverkehr entweder über einen Handapparat 13 erfolgt oder mit dem Mikrofon und dem Lautsprecher als Freisprecheinrichtung durchführbar ist.

In Figur 5 ist ein weiteres Endgerät dargestellt. Hiernach ist ein tragbares Telefaxgerät 17 zur Aufnahme eines Funkmoduls 1 entsprechend ausgestattet, so daß nunmehr ein mobiler Telefaxbetrieb möglich ist, wobei gegenüber einem üblichen Telefaxgerät lediglich eine Schnittstellenanpassung erforderlich ist.

Nach Figur 6 dient ein einfach aufgebauter Handapparat 18 als Endgerät, das in einem Gehäuse lediglich eine Tastatur, ein Mikrofon, einen Lautsprecher sowie gegebenenfalls eine LCD-Anzeige enthält und durch die Aufnahme eines Funkmoduls 1 zu einem vollwertigen Mobiltelefon wird.

Somit kann mit einem einzigen GSM- bzw. AMPS-Funkmodul wahlweise die oben aufgeführten Endgeräte in einem GSM- bzw. AMPS-Mobilfunknetz betrieben werden.

Die GSM-Spezifikationen schreiben eine SIM (Subscriber Identity Modul)-Karte vor, die in dem GSM-Funkmodul realisiert ist. So kann der Besitzer eines solchen GSM-Funkmoduls dieses im gesamten Bereich eines GSM-Mobilfunknetzes die entsprechenden Endgeräte benützen, so daß das System sofort weiß, wo sich der Teilnehmer befindet. Dieser Teilnehmer braucht nur für eine einzige Zugangsberechtigung zu bezahlen.

In einem AMPS-Mobilfunknetz ist jedoch keine SIM-Karte vorgesehen, da für jedes Gerät eine Zugangsberechtigung erforderlich ist, also für jedes Gerät eine Grundgebühr entrichtet wird. Mit einem erfindungsgemäßen AMPS-Funkmodul, das eine SIM-Karte enthält, wird nicht mehr das Endgerät personalisiert, sondern das AMPS-Funkmodul, so daß für alle zu benützenden Endgeräte nur noch eine einzige Zugangsberechtigung erforderlich wird.

## Patentansprüche

1. Mobilfunkanlage für drahtlose Daten- und Fernsprechübertragung mit einem einen Basisband-Teil (1a) und einen Hf-Teil (16) enthaltenden Funkmodul (1), wobei dieses Funkmodul (1) wahlweise
a) für den Betrieb als Mobiltelefon mit einem Handapparat (18) als Endgerät oder
b) für den Betrieb als Autotelefon mit einem Autoradio (16) als Endgerät oder
c) für den Telefaxbetrieb mit einem mobilen Telefaxgerät (17) als Endgerät
lösbar verbunden werden kann, wobei der Handapparat (18), das Autoradio (16) und das Telefaxgerät (17) jeweils mit Funktionseinheiten ausgerüstet sind, die für den Betrieb als Mobiltelefon, als Autotelefon bzw. als mobiles Telefaxgerät erforderlich sind.

2. Mobilfunkanlage nach Anspruch 1, dadurch gekennzeichnet, daß der Handapparat (18) mit einem Lautsprecher, einem Mikrofon und einer Tastatur ausgerüstet ist.

3. Mobilfunkanlage nach Anspruch 2, dadurch gekennzeichnet, daß der Handapparat (18) eine Anzeigeeinheit aufweist.

4. Mobilfunkanlage nach einem der vorangehenden Ansprüche, dadurch gekennzeichnet, daß das Autoradio (16) neben der Empfangseinheit für den AM/FM-Empfang ein Mikrofon und eine Ein- und Ausgabeeinheit aufweist.

5. Mobilfunkanlage nach einem der vorangehenden Ansprüche, dadurch gekennzeichnet, daß das Telefaxgerät (17) eine Funktionseinheit zur Schnittstellenanpassung aufweist.

6. Mobilfunkanlage nach einem der vorangehenden Ansprüche, dadurch gekennzeichnet, daß als weiteres Endgerät ein tragbarer Computer (15) vorgesehen ist.

7. Mobilfunkanlage nach einem der vorangehenden Ansprüche, dadurch gekennzeichnet, daß das Funkmodul (1) entsprechend dem PCMCIA-Standardformat aufgebaut ist und über eine gemäß diesem PCMCIA-Standardformat definierte digitale Schnittstelle mit dem Endgerät (15, 16, 17, 18) verbunden ist und daß über diese digitale Schnittstelle neben digitalen Daten auch analoge Daten, insbesondere Sprachinformationen übertragen werden.

8. Mobilfunkanlage nach einem der vorangehenden Ansprüche, dadurch gekennzeichnet, daß im Autotelefonbetrieb die Autoradiolautsprecher für eine Freisprecheinrichtung benutzt werden.

9. Mobilfunkanlage nach einem der vorangehenden Ansprüche, dadurch gekennzeichnet, daß für den Autotelefonbetrieb ein Handapparat (13) vorgesehen ist, der mit dem Autoradio (16) lösbar verbunden werden kann.

10. Mobilfunkanlage nach einem der vorangehenden Ansprüche, dadurch gekennzeichnet, daß das Funkmodul (1) ein Modem (6) für leitungsgebundene Daten- und Sprachübertragung aufweist.

11. Verwendung der Mobilfunkanlage nach einem der vorangehenden Ansprüche im GSM- bzw. im AMPS-Mobilfunknetz.
